# EUROPÄISCHE PATENTSCHRIFT

(11) **EP 2 630 377 B1**
(45) Veröffentlichungstag und Bekanntmachung des Hinweises auf die Patenterteilung: **24.09.2014**
(21) Anmeldenummer: 11810789.5
(22) Anmeldetag: 20.10.2011
(51) Int. Cl.: F16B 12/22

(54) **KIPPSICHERUNG**
ANTI-TIPPING DEVICE
SÉCURITÉ ANTI-BASCULEMENT

(30) Priorität: 20.10.2010 DE 202010008851 U
(43) Veröffentlichungstag der Anmeldung: 28.08.2013
(73) Patentinhaber: hülsta-werke Hüls GmbH & Co. KG, 48703 Stadtlohn (DE)
(72) Erfinder: HÜLS, Ludwig, 48653 Coesfeld (DE); KÖNNING, Günter, 48703 Stadtlohn (DE)
(74) Vertreter: Habbel, Ludwig
(86) Internationale Anmeldenummer: PCT/DE2011/075255
(87) Internationale Veröffentlichungsnummer: WO 2012/052016

(56) Entgegenhaltungen:
- US-A- 1 533 724
- US-A- 4 460 147

## Beschreibung

Die Erfindung betrifft einen Kippsicherungs-Beschlag nach dem Oberbegriff des Anspruchs 1 sowie eine Beschlaganordnung unter Verwendung eines derartigen Beschlags.

Aus der US 4 460 147 A ist ein gattungsgemäßer Beschlag bekannt. Das möbelseitige Beschlagelement wird beispielsweise durch einen etwa U-förmigen, liegend angeordneten Bügel gebildet, der mit seinen beiden freien Enden in der Rückseite des Möbels befestigt ist. In der Wand, vor welcher das Möbel aufgestellt werden soll, wird ein nach oben abgewinkelter Haken oder eine Schraube als wandseitiges Beschlagelement verankert. Anschließend wird das Möbel so nah vor der Wand aufgestellt, dass die Unterkante des Bügels den nach oben gerichteten Haken oder den Schraubenkopf übergreift, so dass auf diese Weise das Möbel gegen Umkippen gesichert ist. Dies kann beispielsweise bei sehr hohen und vergleichsweise flachen Möbeln mit dem entsprechend hohen Schwerpunkt vorteilhaft sein, oder bei Möbeln, die aufgrund von Schubkästen umzukippen drohen, wenn ein schwer beladener Schubkasten ausgezogen ist und dementsprechend den Schwerpunkt des Möbels in einer die Standfestigkeit des Möbels gefährdenden Weise verlagert.

Problematisch ist die korrekte Ausrichtung der beiden Beschlagelemente zueinander, also einerseits des wandseitigen Beschlagelements wie z. B. der Schraube, Haken o. dgl., und andererseits des am Möbel befestigten Beschlagelementes. Häufig sind Änderungen hinsichtlich der Aufstellung des Möbels erforderlich, beispielsweise wenn der Abstand von der Wand aufgrund von vorhandenen oder ggf. zu entfernenden Fußleisten sich ändert, oder wenn die Position des Möbels seitlich nach rechts oder links korrigiert werden soll, sei es aus Platzgründen oder aus ästhetischen Gründen, beispielsweise für eine symmetrische Anordnung zweier Möbel bezüglich eines vorgegebenen, die Symmetrieebene definierenden Fixpunktes. Weiterhin kann ein Problem mit zunehmendem Zeitablauf darin bestehen, dass beispielsweise ein Teppich, auf dem das Möbel aufsteht, nachgibt und somit das Möbel langsam absinkt, oder dass im Bodenbelag bzw. im Estrich gewisse Setzungen stattfinden, so dass auch das Möbel sich gegenüber dem in der Wand fixierten Beschlagelement absenkt. Dies kann schließlich dazu führen, dass das Möbel mit einem erheblichen Gewichtsanteil an dem wandseitigen Beschlagelement hängt, so dass ggf. das möbelseitige Beschlagelement gelockert wird. Das gleiche gilt, wenn beim Aufstellen des Möbels geringfügige Höhenkorrekturen vorgenommen werden, beispielsweise durch die praxisüblichen Höheneinsteller, die im Sockel oder in den Füßen des Möbels vorgesehen sind.

Der Erfindung liegt die Aufgabe zugrunde, einen gattungsgemäßen Kippsicherungs-Beschlag dahingehend zu verbessern, dass dieser einen Toleranzausgleich in mehreren Ebenen ermöglicht und somit eine problemlose Kippsicherung des Möbels auch dann ermöglicht, wenn Lagekorrekturen des Möbels vorgenommen werden sollen, wobei die Herstellung der Verbindung zwischen dem Möbel, welches mit dem einen Beschlagelement versehen ist, und der Wand, die mit dem anderen Beschlagelement versehen ist, möglichst einfach durchführbar ist.

Diese Aufgabe wird durch einen Kippsicherungs-Beschlag mit den Merkmalen des Anspruchs 1 gelöst. Eine die Vorteile des Beschlags bietende Beschlaganordnung ist in Anspruch 5 beschrieben.

Die Erfindung schlägt mit anderen Worten vor, dass der Beschlag am Möbel ein so genanntes möbelseitiges Beschlagelement enthält, welches ein aufrecht verlaufendes Langloch aufweist, so dass hierdurch ein Höhenausgleich ermöglicht ist, indem dieses aufrecht verlaufende Langloch dazu dient, eine Höhenbeweglichkeit des Beschlagelementes relativ zu dem Vorsprung des wandseitigen Beschlagelements zu bewirken, so dass auf diese Weise Höhenänderungen des Möbels problemlos möglich sind, sei es bei der erstmaligen Aufstellung des Möbels oder sei es aufgrund anschließender Setzungen.

Die Breite des Schlitzes ist um wenigstens 2mm größer als die Breite des Stegs des wandseitigen Beschlagelements, so dass eine seitliche Beweglichkeit des Möbels sichergestellt ist und seitliche Feinkorrekturen durchgeführt werden können. Die angegebene Mindestgröße des Spiels von 2 mm soll klarstellen, dass die Schlitzbreite erkennbar größer gewählt ist als es allein für die klemmfreie Aufnahme des Stegs des wandseitigen Beschlagelements erforderlich wäre. Bei geeigneter Ausgestaltung der beiden zusammenwirkenden Beschlagelemente kann das seitliche Spiel vorteilhaft größer als 2 mm sein, um einen entsprechend größeren Korrekturspielraum zu bieten. Bei großen seitlichen Abweichungen kann, wie eingangs erwähnt, das wandseitige Beschlagelement versetzt werden, so dass im vorschlagsgemäßen Beschlag bereits ein kleines seitliches Spiel von einigen Millimetern ausreichend ist, um die gewünschten seitlichen Feinkorrekturen innerhalb des Beschlages aufnehmen zu können.

Die Breite des Schlitzes ist dabei stets geringer als die Breite des Vorsprungs des wandseitigen Beschlagelements, so dass die beiden den Schlitz begrenzenden Flanken des möbelseitigen Beschlagelements zwei Sicherungskanten bilden. Im Vergleich zur Verwendung lediglich einer Sicherungskante, wie dies eingangs zum bekannten Stand der Technik erwähnt ist, wird so eine besonders sichere Festlegung des Möbels an dem wandseitigen Beschlagelement ermöglicht.

Der Schlitz mündet zumindest an einem seiner beiden Enden ins Freie, so dass das möbelseitige Beschlagelement mit dem Schlitz über den Steg des wandseitigen Beschlagelements geführt und quer zur Längsrichtung des Stegs auf den Steg aufgeschoben werden kann.

In dem möbelseitigen Beschlagelement sind zudem zwei Beschlagplatten vorgesehen, die unterschiedlich weit von der Rückseite des Möbels entfernt sind. Zwischen diesen Beschlagplatten ist der Vorsprung des wandseitigen Beschlagelements geführt, so dass bei einer entsprechenden Verstellung dieses Vorsprungs das Möbel entweder näher zur Wand herangezogen werden kann oder auch in umgekehrter Richtung von der Wand weg gedrückt und somit in einen definierten Abstand von der Wand gebracht werden kann. So lässt sich beispielsweise eine exakt horizontal Ausrichtung der Deckelplatte des Möbels einstellen.

Eine einfache Montage des Beschlages wird dadurch ermöglicht, dass sich der Schlitz nach unten hin zu einem so genannten Einführtrichter erweitert, wobei die Bezeichnung als Einführtrichter gewählt ist, weil sich in diesem Bereich der Flankenabstand nach unten hin vergrößert, also eine Art Fangfunktion bewirkt wird, wenn das Möbel mit seinem möbelseitigen Beschlagelement auf den Vorsprung des wandseitigen Beschlagelementes geführt wird, was ggf. unter Bedingungen erfolgt, in denen beide Beschlagelemente nicht einsehbar sind.

Die Funktion eines Einführtrichters ist vorschlagsgemäß auch in einer anderen Richtung dadurch verwirklicht, dass sich die Beschlagplatte, in welcher sich der Schlitz und der Einführtrichter befinden, in dem Bereich, in dem es den Einführtrichter aufweist, nach unten hin weiter von der Rückseite des Möbels entfernt als in dem Bereich, in dem es den übrigen Schlitz aufweist, so dass auf diese Weise die Fangfunktion verbessert wird.

Die der Rückseite des Möbels nähere Beschlagplatte kann vorteilhaft eine Aussparung wie z. B. ein Langloch aufweisen. Diese Aussparung ist zumindest teilweise mit dem Schlitz deckungsgleich, so dass ein Werkzeug durch die Aussparung geführt werden kann und auf den Vorsprung einwirken kann, der sich zwischen den beiden Beschlagplatten befindet. Ein als Schraube ausgestaltetes wandseitiges Beschlagelement kann somit verstellt werden, so dass je nach Drehrichtung der Schraube das Möbel an die Wand heran oder von der Wand weg bewegt werden kann, selbst wenn die beiden Beschlagelemente bereits miteinander verbunden sind. Somit ist nicht nur eine Feinjustage während des Aufstellens des Möbels möglich, sondern auch eine spätere Korrektur seines Wandabstandes bzw. seiner Neigung. Wenn das wandseitige Beschlagelement als Nagel ausgestaltet ist, kann es zunächst mit einem provisorischen, zu großen Wandabstand des Vorsprungs montiert werden. Anschließend, nachdem es mit dem möbelseitigen Beschlagelement und somit auch mit dem Möbel verbunden worden ist, kann dieses wandseitige Beschlagelement tiefer in die Wand hineingeschlagen werden, um den gewünschten Wandabstand des Vorsprungs einzustellen.

Der Zugang durch diese Aussparung im möbelseitigen Beschlagelement zu dem Vorsprung des wandseitigen Beschlagelements ist bei hinten offenen Möbeln unproblematisch, beispielsweise bei Regalmöbeln. Wenn das Möbel als Kastenmöbel ausgestaltet ist und an seiner Rückseite eine Rückwand aufweist, kann vorteilhaft in der Rückwand ebenfalls eine Ausnehmung vorgesehen sein, durch welche das wandseitige Beschlagelement zugänglich ist, welche mit der Aussparung im möbelseitigen Beschlagelement fluchtet. So kann vom Möbelinneren her auf das wandseitige Beschlagelement eingewirkt werden.

Die Befestigung des möbelseitigen Beschlagelements am Möbel kann vorteilhaft mittels eines Rahmen erfolgen, an dem auch die beiden Beschlagplatten befestigt und so in einem definierten Abstand zueinander gehalten sind. Der Rahmen weist wenigstens zwei Seitenflächen und eine Stirnfläche auf und kann beispielsweise als U-förmig umlaufender Rahmen ausgestaltet sein, der an drei Seiten um die Beschlagplatten umläuft. Dabei ist die Stirnfläche des Rahmens dem frei mündenden Ende des Schlitzes gegenüberliegend angeordnet, so dass das Aufschieben des möbelseitigen Beschlagelements auf den Steg des wandseitigen Beschlagelements erleichtert wird. In den Seitenflächen und der Stirnfläche ist jeweils wenigstens eine Bohrung vorgesehen, mittels derer das möbelseitige Beschlagelement an dem Möbel befestigt werden kann, beispielsweise durch wenigstens eine Schraube oder einen Nagel. Daher sind die Bohrungen derart angeordnet, dass diese Befestigung ermöglicht wird.

Ein Ausführungsbeispiel der Erfindung wird anhand der rein schematischen Darstellungen nachfolgend näher erläutert. Dabei zeigt
- Fig. 1: eine perspektivische Ansicht auf zwei Beschlagelemente, von denen eines an einem Möbel befestigt ist, und
- Fig. 2: eine perspektivische Ansicht auf die Beschlagelemente von Fig. 1 aus einer anderen Blickrichtung und ohne das Möbel.

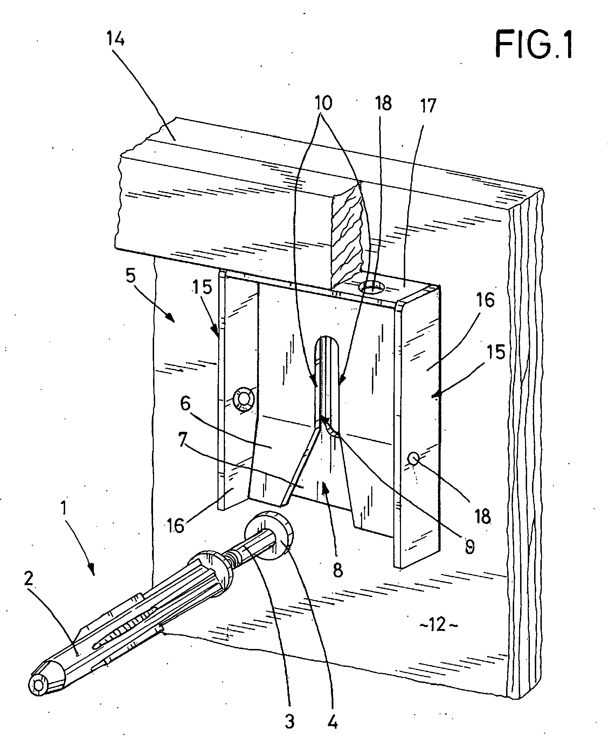

In Fig. 1 ist ein wandseitiges Beschlagelement 1 dargestellt, welches mittels einem Dübel 2 in einer Wand befestigt werden kann und als Schraube 3 ausgestaltet ist. Der Schaft der Schraube 3 bildet einen Steg, und der Kopf der Schraube 3 bildet einen Vorsprung 4, welcher von einem möbelseitigen Beschlagelement 5 hinterfasst werden kann.

Das möbelseitige Beschlagelement 5 weist zwei Beschlagplatten 6 und 7 auf, die in unterschiedlichen Abständen von der Rückseite 12 eines Möbels 14 vorgesehen sind. Die von der Rückseite 12 des Möbels 14 weiter entfernte Beschlagplatte 6 ist in ihrem unteren Bereich abgewinkelt und weist dort einen nach unten hin zunehmend größeren Abstand von der anderen Beschlagplatte 7 und dementsprechend auch von der Rückseite 12 des Möbels 14 auf. In diesem schräg vom Möbel 14 weg verlaufenden Bereich weist diese Beschlagplatte 6 einen Einführtrichter 8 auf, der weiter oben zu einem Schlitz 9 fortgeführt ist, so dass die beiden Flanken, die den Schlitz 9 begrenzen, jeweils eine Sicherungskante 10 bilden, mit denen das möbelseitige Beschlagelement 5 den Vorsprung 4 des wandseitigen Beschlagelementes 1 hintergreift. Die Breite des Schlitzes 9 ist dabei deutlich größer als der Durchmesser des Steges der Schraube 3, so dass eine Relativbewegung zwischen den beiden Beschlagelementen 1 und 5 auch möglich ist, wenn das wandseitige Beschlagelement 1 mit dem möbelseitigen Beschlagelement 5 verbunden ist.

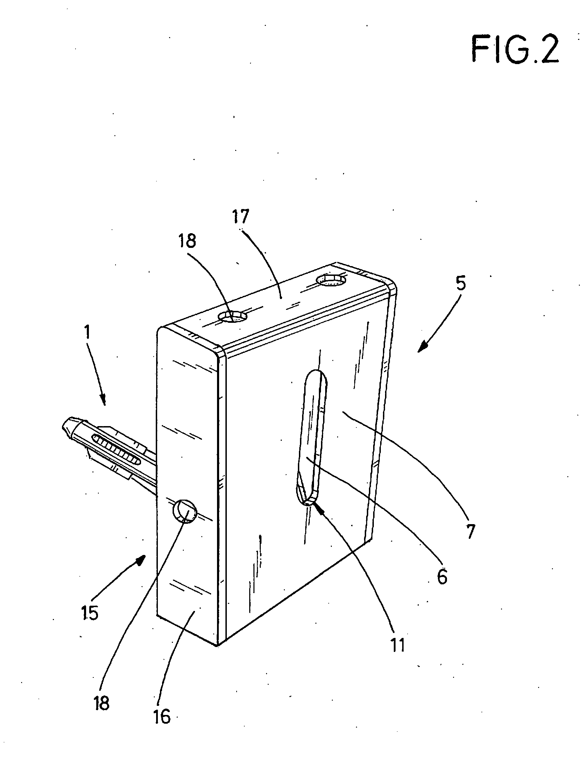

Wie insbesondere aus Fig. 2 ersichtlich ist, weist die der Rückseite des Möbels 14 nähere Beschlagplatte 7 ein aufrecht verlaufendes Langloch als Aussparung 11 auf, welches hinter dem Schlitz 9 verläuft, so dass durch diese Aussparung 11 ein Zugriff auf den Schraubenkopf der Schraube 3 möglich ist.

In der Rückseite 12 des Möbels 14 ist eine in den Zeichnungen nicht ersichtliche Aussparung vorgesehen, welche die Aussparung 11 zumindest teilweise überdeckt, so dass von dem Möbelinneren her ein Werkzeug durch diese Aussparung in der Rückseite 12 sowie durch die Aussparung 11 hindurch auf den Schraubenkopf einwirken kann.

Das möbelseitige Beschlagelement 5 weist einen dreiseitig umlaufenden Rahmen 15 auf, der zwei Seitenflächen 16 und eine obere Stirnfläche 17 bildet. In diesen Flächen sind Bohrungen 18 vorgesehen, so dass das Beschlagelement 5 entweder wie in Fig. 1 dargestellt unter einen Deckel des Möbels 14 geschraubt werden kann oder - bei anderen Anwendungsfällen - an eine Seitenwange des betreffenden Möbels.

## Patentansprüche

1. Kippsicherungs-Beschlag eines vor einer Wand aufstellbaren Möbels (14),
mit einem an einer Wand montierbaren, ersten Beschlagelement (1),
welches einen in Draufsicht etwa T-förmigen Querschnitt mit einem sich zur Wand erstreckenden Steg und einem von der Wand beabstandeten Vorsprung (4) aufweist, und mit einem an einem Möbel (14) montierbaren, zweiten Beschlagelement (5),
welches eine den Vorsprung (4) des wandseitigen Beschlagelements (1) hinterfassenden Sicherungskante (10) aufweist,
wobei das möbelseitige Beschlagelement (5) einen aufrecht verlaufenden Schlitz (9) aufweist,
wobei die Breite des Schlitzes (9) größer ist als die Breite des Stegs des wandseitigen Beschlagelements (1), und geringer als die Breite des Vorsprungs (4) des wandseitigen Beschlagelements (1),
derart, dass die beiden den Schlitz (9) begrenzenden Flanken des möbelseitigen Beschlagelements (5) zwei Sicherungskanten (10) bilden,
und dass der Schlitz (9) an einem seiner beiden Enden ins Freie mündet,
derart, dass das möbelseitige Beschlagelement (5) mit dem Schlitz (9) über den Steg des wandseitigen Beschlagelements (1) führbar ist,
und dass das möbelseitige Beschlagelement (5) zwei voneinander beabstandete Beschlagplatten (6, 7) aufweist, von denen die eine Beschlagplatte (6) dem wandseitigen Beschlagelement (1) zugewandt und die andere Beschlagplatte (7) dem Möbel (14) zugewandt vorgesehen sind,
von denen die dem wandseitigen Beschlagelement (1) zugewandte Beschlagplatte (6) den Schlitz (9) aufweist,
und deren Abstand zueinander die Aufnahme des Vorsprungs (4) ermöglichend bemessen ist, und
dass die Breite des Schlitzes (9) um wenigstens 2mm größer ist als die Breite des Stegs des wandseitigen Beschlagelements (1),
dass sich an den Schlitz (9) nach unten hin ein Einführtrichter (8) anschließt, wobei sich der Flankenabstand des Einführtrichters (8) nach unten hin vergrößert, **dadurch gekennzeichnet, dass** sich die den Schlitz (9) aufweisende Beschlagplatte (6) in dem Bereich, in dem sie den Einführtrichter (8) aufweist, nach unten hin weiter von der Rückseite (12) des Möbels (14) entfernt als in dem Bereich, in dem es den übrigen Schlitz (9) aufweist.

2. Beschlag nach Anspruch 1,
**dadurch gekennzeichnet,**
**dass** die dem Möbel (14) zugewandte Beschlagplatte (7) eine Aussparung (11) aufweist, welche zumindest teilweise mit dem Schlitz (9) deckungsgleich ist, derart, dass ein Werkzeug durch die Aussparung (11) bis zu dem zwischen den beiden Beschlagplatten (6, 7) befindlichen Vorsprung (4) führbar ist.

3. Beschlag nach einem der vorhergehenden Ansprüche,
**dadurch gekennzeichnet,**
**dass** das wandseitige Beschlagelement (1) als Schraube (3) ausgestaltet ist, deren Schraubenkopf den Vorsprung (4) bildet.

4. Beschlag nach einem der vorhergehenden Ansprüche,
**dadurch gekennzeichnet,**
**dass** das möbelseitige Beschlagelement (5) einen Rahmen (15) aufweist, an dem die beiden Beschlagplatten (6, 7) gehalten sind,
wobei der Rahmen (15) wenigstens zwei Seitenflächen (16) und eine Stirnfläche (17) aufweist,
wobei die Stirnfläche (17) dem frei mündenden Ende des Schlitzes (9) gegenüberliegend angeordnet ist,
und wobei in den Seitenflächen (16) und der Stirnfläche (17) jeweils wenigstens eine Bohrung (18) vorgesehen ist, welche die Montage einer dieses Beschlagelement (5) am Möbel (14) festlegenden Montageschraube ermöglichend angeordnet ist.

5. Beschlaganordnung, in welcher ein wandseitiges Beschlagelement (1) an einer Wand festgelegt ist und ein möbelseitiges Beschlagelement (5) an einem Möbel festgelegt ist, und die Beschlagelemente (1, 5) nach einem der vorhergehenden Ansprüche ausgestaltet sind.

6. Beschlaganordnung nach Anspruch 5,
**dadurch gekennzeichnet,**
**dass** in der Rückseite (12) des Möbels (14) sowie in dem möbelseitigen Beschlagelement (5) jeweils eine Ausnehmung (11) vorgesehen ist, durch welche vom Möbelinneren her das wandseitige Beschlagelement (1) betätigbar und der Wandabstand des Vorsprungs (4) einstellbar ist.

## Claims

1. Anti-tilt brace for an item of furniture (14) set up before a wall, having a first brace element (1) affixed to a wall, which, when viewed from above, has a roughly T-shaped cross-section with a web extending towards the wall and a projection (4) at a distance from the wall, and having a second brace element (5) affixed to the item of furniture (14) which has a locking edge (10) which hooks behind the projection (4) of the brace element (1) affixed to the wall, where the brace element (5) affixed to the item of furniture has a vertical slot (9), where the width of the slot (9) is greater than the width of the web of the brace element (1) affixed to the wall and smaller than the width of the projection (4) of the brace element (1) affixed to the wall, such that the two flanks of the brace element (5) affixed to the item of furniture on either side of the slot (9) form two locking edges (10) and where one end of the slot (9) is open, in such a way that the slot (9) of the brace element (5) affixed to the item of furniture can be pushed over the web of the brace element (1) affixed to the wall, and where the brace element (5) affixed to the item of furniture has two brace plates (6, 7) of which one brace plate (6) is arranged to face the brace element (1) affixed to the wall and the other to face the brace element (5) affixed to the item of furniture, of which the brace plate (6) facing the brace element (1) affixed to the wall has the slot (9), and whose distance from one another is such that the projection (4) can be inserted, and where the width of the slot (9) is at least 2 mm greater than the width of the web of the brace element (1) affixed to the wall, where the bottom of the slot (9) widens to form an insertion flare (8), where the distance between the flanks of the insertion flare (8) increases in the downward direction, **characterised in that** the brace plate (6) having the slot (9) is further from the rear side (12) of the item of furniture (14) at the bottom in the area of the insertion flare (8), than in the area of the remaining slot (9).

2. Brace in accordance with claim 1, **characterised in that** the brace plate (7) facing the item of furniture (14) has a recess (11) which is at least partially superposable with the slot (9) so that a tool can be inserted through the recess (11) as far as the projection (4) located between the two brace plates (6, 7).

3. Brace in accordance with any of the aforementioned claims, **characterised in that** the brace element (1) affixed to the wall is formed as a screw (3), whose head forms the projection (4).

4. Brace in accordance with any of the aforementioned claims, **characterised in that** the brace element (5) affixed to the item of furniture has a frame (15) on which the two brace plates (6, 7) are held, where the frame (15) has at least two side surfaces (16) and a front surface (17), where the front surface (17) is arranged opposite the open end of the slot (9) and where at least one hole (18) is provided in each of the side surfaces (16) and the front surface (17) which is arranged to permit the fitting of a screw attaching the brace element (5) to the item of furniture (14).

5. Brace arrangement, where a brace element (1) is attached to a wall and a further brace element (5) is attached to an item of furniture, and these brace elements (1, 5) are formed in accordance with any of the aforementioned claims.

6. Brace arrangement in accordance with claim 5, **characterised in that** a recess (11) is provided at the rear (12) of the item of furniture (14) and in the brace element (5) affixed to the item of furniture, through which the brace element (1) affixed to the wall can be activated from the inside of the item of furniture, and the distance of the projection (4) from the wall can be adjusted.

## Revendications

1. Ferrure de sécurité anti-basculement d'un meuble (14) installable devant un mur, comprenant un premier élément (1) de ferrure montable contre un mur, lequel élément vu de dessus présente une section approximativement en T avec une nervure s'étendant en direction du mur et une saillie (4) située à distance du mur, et comprenant un second élément (5) de ferrure montable contre un meuble (14), élément qui présente une arête de sécurisation (10) saisissant par derrière la saillie (4) de l'élément (1) de ferrure côté mur, sachant que l'élément (5) de ferrure côté meuble présente une fente (9) au tracé vertical, sachant que la largeur de la fente (9) est supérieure à la largeur de la nervure que comporte l'élément (1) de ferrure côté mur, et inférieure à la largeur de la saillie (4) que comporte l'élément (1) de ferrure côté mur, de sorte que les deux flancs de l'élément (5) de ferrure côté meuble qui délimitent la fente (9) forment deux arêtes de sécurisation (10) et que la fente (9) est débouche ouverte à l'une de ses deux extrémités, de sorte que l'élément (5) de ferrure côté meuble est guidable à l'aide de la fente (9) via la nervure de l'élément (1) de ferrure côté mur, et que l'élément (5) de ferrure côté meuble présente deux plaques (6, 7) de ferrure distantes l'une de l'autre, prévues pour que l'une (6) des deux plaques de ferrure regarde l'élément (1) de ferrure côté mur, et que l'autre (7) des deux plaques regarde le meuble (14), la plaque (6) de ferrure qui regarde l'élément (1) de ferrure côté mur présentant la fente (9), et dont l'écart réciproque est dimensionné pour permettre de loger la saillie (4), et de sorte que la largeur de la fente (9) soit au moins de 2 mm supérieure à la largeur de la nervure de l'élément (1) de ferrure côté mural, de sorte que la fente (9) soit prolongée vers le bas par un entonnoir d'introduction (8), sachant que l'écart entre les flancs de l'entonnoir d'introduction (8) va en augmentant vers le bas,
**caractérisée en ce que** la plaque (6) de ferrure présentant la fente (9) est, en direction du bas, plus éloignée du dos (12) du meuble (14) dans la zone dans laquelle elle présente l'entonnoir d'introduction (8), que dans la zone où elle présente le reste de la fente (9).

2. Ferrure selon la revendication 1,
**caractérisée en ce que** la plaque (7) de ferrure regardant le meuble (14) présente un évidement (11) au moins partiellement en superposition avec la fente (9), de sorte qu'il est possible d'introduire un outil dans l'évidement (11) pour atteindre la saillie (4) située entre les deux plaques (6, 7) de ferrure.

3. Ferrure selon l'une des revendications précédentes, **caractérisée en ce que** l'élément (1) de ferrure côté mur est configuré en vis (3) dont la tête forme la saillie (4).

4. Ferrure selon l'une des revendications précédentes, **caractérisée en ce que** l'élément (5) de ferrure côté meuble présente un cadre (15) contre lequel sont retenues les deux plaques (6, 7) de ferrure, sachant que le cadre (15) présente au moins deux surfaces latérales (16) et une surface frontale (17), sachant que la surface frontale (17) est agencée en face de l'extrémité ouverte de la fente (9), et sachant que sur les surfaces latérales (16) et la surface frontale (17) est prévu respectivement au moins un alésage (18), alésage qui est agencé pour permettre le montage d'une vis qui permet de fixer l'élément (5) de ferrure contre le meuble (14).

5. Agencement de ferrure dans lequel un élément (1) de ferrure côté mural est fixé contre un mur et un élément (5) de ferrure côté meuble est fixé contre un meuble, et dans lequel les éléments de ferrure (1, 5) sont configurés selon l'une des revendications précédentes.

6. Agencement de ferrure selon la revendication 5, **caractérisé en ce qu'**un évidement (11) est prévu au dos (12) du meuble (14) ainsi que dans l'élément (5) de ferrure côté meuble, évidement à travers lequel il est possible, depuis l'intérieur du meuble, d'actionner l'élément (1) de ferrure côté mur et de régler l'écart de la saillie (4) par rapport au mur.
